# EUROPÄISCHE PATENTSCHRIFT

(11) **EP 2 225 746 B1**
(45) Veröffentlichungstag und Bekanntmachung des Hinweises auf die Patenterteilung: **08.06.2011**
(21) Anmeldenummer: 08804950.7
(22) Anmeldetag: 01.10.2008
(51) Int. Cl.: G08G 1/0968, G01C 21/34

(54) **VERFAHREN ZUR ROUTENBESTIMMUNG UND ANORDNUNG DAZU**
METHOD FOR SPECIFYING A ROUTE AND ARRANGEMENT THEREFOR
PROCÉDÉ DE DÉTERMINATION D'ITINÉRAIRE, ET DISPOSITIF CORRESPONDANT

(30) Priorität: 30.11.2007 DE 102007057715
(43) Veröffentlichungstag der Anmeldung: 08.09.2010
(73) Patentinhaber: Robert Bosch GmbH, 70442 Stuttgart (DE)
(72) Erfinder: MUELLER, Guido, 06484 Quedlinburg (DE); LAEDKE, Michael, 31141 Hildesheim (DE); STUEBNER, Guido, 30455 Hannover (DE)
(86) Internationale Anmeldenummer: PCT/EP2008/063126
(87) Internationale Veröffentlichungsnummer: WO 2009/068352

(56) Entgegenhaltungen:
- EP-A- 0 703 433
- EP-A- 1 191 307
- EP-A- 1 491 859

## Beschreibung

### Stand der Technik

Die Erfindung geht von einer Anordnung und einem Verfahren nach der Gattung der unabhängigen Patentansprüche aus.

Es sind Fahrzeugnavigationssysteme bekannt, die einen Fahrzeugführer mittels angezeigter oder Sprach-Zielführungshinweise von einer aktuellen Position entlang einer berechneten Route zu einem Ziel führen. Die Routenberechnung erfolgt dabei regelmäßig im Sinne einer Optimierung der Route hinsichtlich mindestens eines Optimierungskriteriums, wie schnellste oder kürzeste Route.

Aus der DE 40 08 460 A1 ist ein Navigationssystem für ein Landfahrzeug bekannt, das Verkehrsmeldungen empfängt und kontinuierlich auswertet und eine erste Fahrroute ohne Berücksichtigung von Verkehrsmeldungen und eine zweite Fahrroute unter Berücksichtigung der empfangenen Verkehrsmeldungen berechnet. Ergibt ein Vergleich der ersten mit der zweiten Route, dass die zweite Route voraussichtlich schneller als die erste Route ist, so wird die zweite Route als Routeninformation an eine Ausgabevorrichtung des Navigationssystems geliefert und der Fahrer des Landfahrzeuges wird auf der zweiten Route zum Ziel geführt.

Bei diesem Vorgehen, nachfolgend auch als automatische Dynamisierung bezeichnet, wird mit jeder Änderung der Verkehrslage eine Alternativroute berechnet und die weitere Zielführung erfolgt automatisch auf Basis der neuen Route.

Aus Patent Abstracts of Japan, Publication Number 07-083685 ist ein Navigationssystem bekannt, bei dem darüber hinaus die zweite Route als Alternativroute zu der ersten Route ausgegeben wird und die Auswahl zwischen der ersten und der zweiten Route dem Fahrer überlassen wird.

Bei dieser Ausprägung, nachfolgend auch als manuelle Dynamisierung bezeichnet, wird der Fahrer über jede Änderung der Verkehrslage informiert und muss sich aktiv für die alte oder neue Verkehrslage und die daraus resultierende Route entscheiden. In einigen Systemen kann er dies auch anhand der Routen selbst.

Die beiden beschriebenen Ausprägungen der Dynamisierung haben sowohl spezifische Vorteile, als auch Nachteile.

Als ein entscheidender Vorteil der automatischen Dynamisierung ist anzuführen, dass der Fahrer durch das Navigationssystem nicht unnötig abgelenkt wird und sich voll und ganz auf den Straßenverkehr konzentrieren kann. Nachteilig ist, dass der Fahrer kaum individuellen Einfluss nehmen kann. So wird die alternative Route verwendet, auch wenn diese keinen nennenswerten Routenvorteil gegenüber der alten Route mit sich bringt oder die Verkehrsmeldungsquelle (z.B. RDS-TMC, TMCPro oder XM-TMC) als weniger zuverlässig eingestuft wird.

Bei der manuellen Dynamisierung ergibt sich für den Fahrer durch die Möglichkeit der aktiven Einflussnahme ein Vorteil, je nach subjektiver Einschätzung der Routenänderung die alte oder die alternative Route für die weitere Zielführung zu verwenden. Nachteilig ist, dass der Fahrzeugführer bei jeder Änderung der Verkehrsmeldungslage aktiv in die Routenauswahl einbezogen und dabei von seiner eigentlichen Aufgabe, der aktiven Teilnahme am Straßenverkehr, abgelenkt wird.

Der Vorteil des einen Verfahrens ist somit der Nachteil des anderen Verfahrens. Zum einen sind beide Vorteile für den Anwender sehr angenehm, andererseits die beiden Nachteile aber durchaus problematisch.

In der EP 0 838 797 B1 ist eine Variante der manuellen Dynamisierung beschrieben, die eine Auswahl der Route durch den Benutzer dahingehend erleichtert, dass diesem Zielführungshinweise für beide Routen angeboten werden und eine der beiden Routen durch Befolgen eines der Zielführungshinweise, also durch konkludentes Handeln, ausgewählt wird.

EP 1 491 859 A1 schlägt vor, eine sogenannte statische Route auf der Basis statischer Informationen und eine sogenannte dynamische Route auf der Basis aktueller Informationen zu bestimmen und einem Benutzer zur Auswahl darzubieten. EP 1 191 307 A2 betrifft ein Navigationssystem, in dem zwei unterschiedliche Routen zu einem Zielpunkt bestimmt und miteinander verglichen werden, wobei das Vergleichsergebnis einem Benutzer des Navigationssystems dargeboten wird.

### Vorteile der Erfindung

Die Erfindung mit den Merkmalen der unabhängigen Patentansprüche hat den Vorteil, die Vorteile der beiden vorgenannten Vorgehensweisen, also automatischer und manueller Dynamisierung, miteinander zu verbinden und gleichzeitig die Nachteile der beiden Verfahren zu vermeiden.

Dazu wird bei einem Verfahren zum Bestimmen einer Route für eine Zielführung eine erste Route unter Annahme einer ersten Verkehrslage bestimmt, eine zweite Route unter Annahme einer zweiten Verkehrslage bestimmt, die zweite Route mit der ersten Route verglichen und aus dem Vergleich eine Routenänderungsdifferenz bestimmt, und es werden einem Benutzer die beiden Routen nur dann zur Auswahl für eine weitere Zielführung angeboten, wenn die Routenänderungsdifferenz einen ersten Schwellwert überschreitet. Damit wird erreicht, dass der Benutzer nur dann mit einer Routenauswahl belastet wird, wenn sich infolge einer geänderten Verkehrslage durch die dann günstigste Route gegenüber der ursprünglichen Route eine erhebliche Routenänderung, insbesondere eine Verschlechterung der Route, beispielsweise ein erheblicher Umweg, ergibt.

Vorteilhaft wird automatisch eine der beiden Routen für die folgende Zielführung bestimmt, wenn die Routenänderungsdifferenz den ersten Schwellwert nicht überschreitet. Damit wird erreicht, dass der Benutzer bei geringer Routenänderungsdifferenz und damit geringer Routenänderung nicht mit der Routenauswahl belastet wird.

Vorteilhaft wird im Falle einer Routenänderungsdifferenz kleiner Null, wenn sich also eine Verbesserung der Route, beispielsweise eine kürzere Route, etwa infolge einer Entspannung der Verkehrslage oder dergleichen, ergibt, automatisch die zweite Route ausgewählt, das heißt, es erfolgt eine automatische Dynamisierung ohne Benutzerinteraktion.

Vorteilhaft wird ein Fahrzeitvorteil aus einem Vergleich der Auswirkungen des Befolgens der zweiten Route mit denen des Befolgens der ersten Route jeweils unter Annahme der zweiten Verkehrslage bestimmt und automatisch die zweite Route ausgewählt, wenn der Routenvorteil einen zweiten Schwellwert überschreitet und die Routenänderungsdifferenz den ersten Schwellwert nicht überschreitet.

Vorteilhaft wird ein Routenvorteil aus einem Vergleich der Auswirkungen des Befolgens der zweiten Route mit denen des Befolgens der ersten Route jeweils unter Annahme der zweiten Verkehrslage bestimmt und automatisch die erste Route ausgewählt, wenn die Routenänderungsdifferenz den ersten Schwellwert nicht überschreitet und einen dritten Schwellwert nicht unterschreitet sowie der Routenvorteil den zweiten Schwellwert nicht überschreitet. Dieser dritte Schwellwert kann kleiner oder gleich Null sein.

Zur Unterstützung des Benutzers bei der Auswahl einer der gegebenenfalls zur Auswahl angebotenen Routen wird vorteilhaft der mit der Alternativroute verbundene Effekt, also insbesondere die Routenänderungsdifferenz und vorzugsweise auch der Routenvorteil, hier besonders der Fahrzeitvorteil, der zweiten gegenüber der ersten Route, ausgegeben. Alternativ oder ergänzend kann hier auch vorgesehen sein, dass die entsprechenden routenrelevanten Parameter, also insbesondere der Parameter, auf dessen Grundlage die Routenänderungsdifferenz bestimmt wurde, beispielsweise Fahrstrecke, sowie beispielsweise Fahrzeitvorteil zu den zur Auswahl angebotenen Routen ausgegeben werden.

Erfindungsgemäß wird der erste Schwellwert, auf dessen Grundlage eine Entscheidung über eine automatische oder manuelle oder keine Dynamisierung getroffen wird, manuell durch den Benutzer vorgegeben. So kann das Systemverhalten ausgehend von einem werkseitigen Setup an benutzerspezifische Vorlieben angepasst werden. Gemäß einer vorteilhaften Weiterbildung werden der oder die Schwellwerte anhand des Benutzerverhaltens beim Betrieb des Navigationssystems automatisch angepasst. Dazu werden die Entscheidungen des Benutzers in den Fällen, in denen zwei Routen zur Auswahl angeboten werden, statistisch ausgewertet.

### Zeichnungen

Ausführungsbeispiele der Erfindung sind in der Figur dargestellt und werden nachfolgend näher erläutert. Gleiche Bezugszeichen bezeichnen dabei gleiche oder gleichwirkende Elemente.

Es zeigen
Figur 1 eine Anordnung zur Durchführung des erfindungsgemäßen Verfahrens,
Figur 2 einen Ausschnitt aus einem Verkehrswegenetz,
Figur 3 einen weiteren Ausschnitt aus dem Verkehrswegenetz,
Figur 4 ein erstes Diagramm,
Figur 5 ein zweites Diagramm und
Figur 6 ein drittes Diagramm.

### Beschreibung der Ausführungsbeispiele

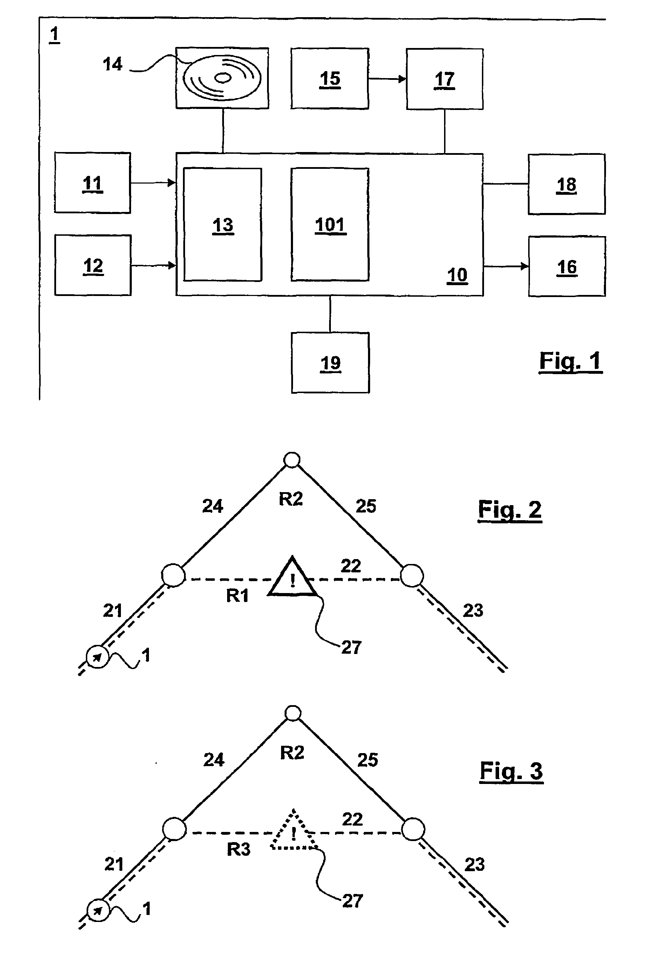

In Figur 1 bezeichnet 1 die erfindungsgemäße Anordnung zur Durchführung des erfindungsgemäßen Verfahrens. Im vorliegenden Fall handelt es sich dabei beispielsweise und ohne Beschränkung der Allgemeinheit der Erfindung um ein Navigationsgerät, hier insbesondere zur temporären oder dauerhaften Verwendung in einem Fahrzeug.

Das Navigationsgerät 1 umfasst in an sich bekannter Weise Mittel 11 zur Eigenortung und damit zur Bestimmung eines aktuellen Fahrzeugstandorts, beispielsweise einen Empfänger für GPS-Satellitenortungssignale, bevorzugt zusätzlich Inertialsensoren und dergleichen mehr, wobei aus einer Verknüpfung dieser Signale der jeweils aktuelle Standort bestimmt wird. Über eine Bedieneinrichtung 12, welche vorzugsweise über Bedienelemente verfügt, kann vom Benutzer ein Fahrziel eingegeben werden. In der Folge berechnet ein Routenberechnungsmodul 13, welches vorzugsweise ein Softwaremodul ist, das von einem Rechner einer zentralen Steuerung 10 des Navigationssystems 1 abgearbeitet wird, eine Route vom aktuellen Fahrzeugstandort zum eingegebenen Fahrziel über ein Verkehrswegenetz, welches durch in einem Massenspeicher 14 gespeicherte Kartendaten repräsentiert wird. Diese Route wird in einem Routenspeicher 18 gespeichert. Bei dieser Routenberechnung werden Informationen über Verkehrsstörungen berücksichtigt, die beispielsweise über Rundfunk als TMC-(Traffic Message Channel)- Verkehrsmeldungen ausgestrahlt und mit einem Rundfunkempfänger 15 empfangen worden sind. Die Berücksichtigung der Verkehrsmeldungen oder genauer der darin enthaltenen verkehrsrelevanten Ereignisse erfolgt vorzugsweise durch eine ereignis- und ausmaßabhängige Anpassung der den Elementen des Verkehrswegenetzes zugeordneten Gewichte, wie Durchfahrzeiten, Geschwindigkeitswerte und dergleichen. Die berechnete Route wird einer nachfolgenden Zielführung zugrunde gelegt, wobei im Zuge der Fortbewegung des Fahrzeugs dessen jeweils aktueller Standort bestimmt und mit dem Routenverlauf abgeglichen wird und bedarfsweise Zielführungshinweise zum Befolgen der Route erzeugt und beispielsweise als synthetisierte Sprache über eine Ausgabeeinrichtung 16 akustisch ausgegeben werden.

Bei diesem Navigationsgerät 1 wird eine Neuberechnung der Route bei Änderung einer Verkehrslage initiiert. Unter Verkehrslage wird dabei die Gesamtheit der vorliegenden Verkehrsmeldungen, die vorzugsweise in einem Speicher 17 des Navigationsgeräts abgelegt sind, verstanden. Diese Verkehrsmeldungen können insbesondere beispielsweise über Rundfunk als sogenannte TMC-Verkehrsmeldungen gemäß ISO 14819 empfangen worden sein. Eine Änderung der Verkehrslage ergibt sich dabei dadurch, dass beispielsweise mittels des Rundfunkempfängers 15 oder auf anderem Wege zusätzliche Verkehrsmeldungen erhalten werden, die noch nicht im Speicher 17 vorliegen, Meldungen über das Entfallen, oder die Abschwächung von bislang vorliegenden Verkehrsstörungen, sogenannte Löschmeldungen (umfassen in den nachfolgenden Beschreibungen auch Abschwächungen von existierenden Verkehrsstörungen), erhalten werden oder bestimmte im Speicher 17 vorhandene Verkehrsmeldungen nicht mehr erhalten werden. Unter Verkehrslage wird hier somit die Menge der im Navigationsgerät vorliegenden Verkehrsstörungsmeldungen, also eine Verkehrsmeldungslage verstanden, die von einer realen Verkehrslage differieren kann, da Verkehrsmeldungen nicht immer auf dem aktuellsten Stand sind oder teilweise vom Rundfunkempfänger 15 noch nicht empfangen sind oder dergleichen mehr.

In Figur 2 bezeichnet 1 das Fahrzeugnavigationsgerät bzw. die Position des Fahrzeugs, in dem das Navigationsgerät betrieben wird. Von diesem wurde auf Grundlage einer ersten Verkehrslage eine erste Route R1 berechnet, die über Streckenabschnitte 21, 22 und 23 verläuft. Nach dem Berechnen dieser Route wurde eine neue Verkehrsmeldung erhalten, die eine Störung 27 auf dem Streckenabschnitt, beispielsweise einen Stau oder ein anderes den Verkehrsfluss beeinträchtigendes Ereignis, bezeichnet. Infolge des Erhalts dieser neuen Verkehrsmeldung und der damit einhergehenden neuen, zweiten Verkehrslage wird eine neue, zweite Route R2 berechnet.

Eine demgegenüber veränderte Situation ist in Figur 3 dargestellt. Das Bezugszeichen 1 bezeichnet wieder das Fahrzeugnavigationsgerät bzw. die Position des Fahrzeugs, in dem das Navigationsgerät betrieben wird. Die aktuell gültige Route ist diejenige, die auf Grundlage der geänderten Verkehrslage gemäß Figur 2 berechnet wurde, also die zweite Route R2. Im weiteren Zeitverlauf ergibt sich nun erneut eine neue Verkehrslage dadurch, dass die Verkehrsstörung 27 entfällt, was beispielsweise durch eine Löschmeldung mitgeteilt wird, die vom Rundfunkempfänger 15 empfangen wird. Die Löschmeldung hat zur Folge, dass der Widerstand des Streckenabschnitts 22 wieder auf seinen ursprünglichen Wert reduziert wird. In Reaktion auf die neue Verkehrslage wird nun wiederum eine neue Routenberechnung angestoßen, die als optimale Route die dritte Route R3, welche der ersten Route R1 entspricht, ergibt. Eine geänderte Verkehrslage kann sich also sowohl durch das Auftreten neuer, zusätzlicher Verkehrsstörungen, als auch durch das Entfallen bislang bestehender Verkehrsstörungen ergeben.

Die Steuerung 10 des Navigationsgeräts umfasst ein Bewertungsmodul 101 zur Bewertung der Unterschiede zwischen ursprünglicher Route R1 und alternativer Route R2.

Basierend auf den Werten der alten R1 und der neuen Route R2 wird eine Routenänderungsdifferenz TDV und vorzugsweise zusätzlich ein Routenvorteil, insbesondere ein Fahrzeitvorteil TTA, bestimmt.

Die Routenänderungsdifferenz TDV beschreibt den Unterschied zwischen der alten, ersten Route R1, welche auf Grundlage der ersten Verkehrslage berechnet wurde, also vor der Änderung der Verkehrslage, und der alternativen, zweiten Route R2, welche unter Berücksichtigung der geänderten, zweiten Verkehrslage bestimmt wurde (Figur 2). Sie ist somit ein Maß für die Auswirkung auf die Route selbst durch die Berücksichtigung der neuen Verkehrslage. Entsprechend des eingestellten Optimierungskriteriums wie beispielsweise schnellste Route oder alternativ kürzeste, optimale, verbrauchsgünstigste Route oder dergleichen mehr wird hierfür der abstrakte Widerstand bewertet. Die Routenänderungsdifferenz kann positive Werte annehmen, was einer Verschlechterung der Route mit Blick auf das betrachtete Kriterium entspricht, also beispielsweise eine längere Fahrstrecke der neuen Route R2 gegenüber der alten Route R1 (Figur 2). Die Routenänderungsdifferenz kann aber auch negative Werte annehmen, was einem positiven Effekt entspricht, also beispielsweise kürzere Fahrstrecke der neuen Route R3 gegenüber der alten Route R2 (Figur 3).

Der Routenvorteil TTA hingegen beschreibt den, im Falle des Fahrzeitvorteils zeitlichen, Vorteil der neuen alternativen Route R2 im Vergleich zur alten Route R1, wobei hier in beiden Fällen die neue, zweite Verkehrslage zugrunde gelegt wird (Figur 2). Er ist somit ein Maß für die Relevanz der Alternativroute R2 gegenüber der originalen Route R1. Dabei kann der Fahrzeitvorteil bei neuen Verkehrsmeldungen auf der Route nur größer oder gleich Null sein, da die mögliche Alternativroute im Falle einer Dynamisierung immer gleich oder besser sein muss als die Originale mit der Verkehrsstörung - andernfalls wird keine alternative Route bestimmt.

Eine genauere Analyse der Gründe für die vorteilhaften und nachteiligen Eigenschaften zeigt den Weg für ein Verfahren auf, welches die Vorteile vereinigt und die Nachteile der Verfahren ausräumt.

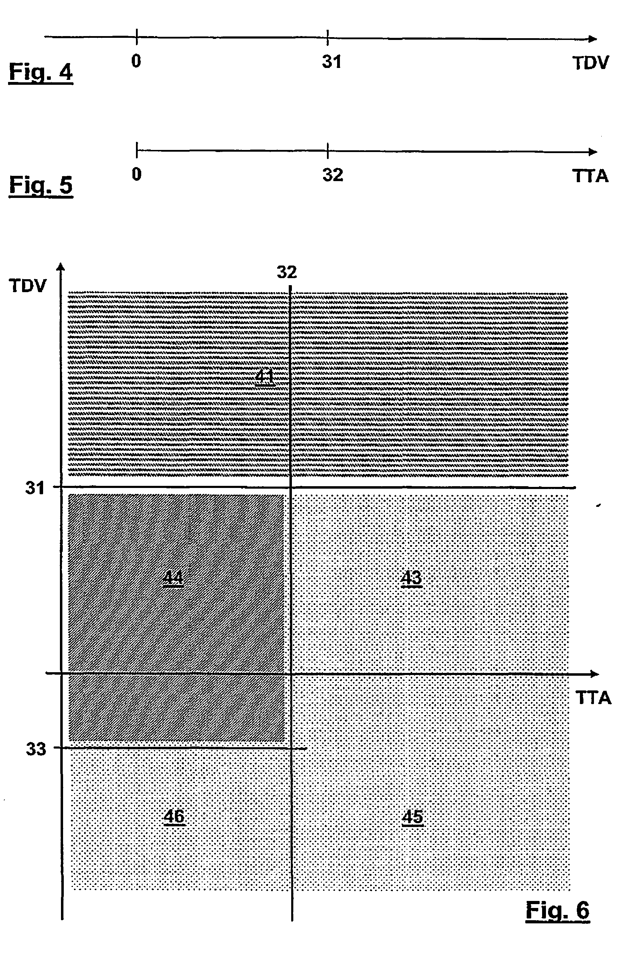

Im Falle der an sich bekannten und vorstehend beschriebenen "manuellen Dynamisierung" wirken bei einer hohen Änderungsrate der Verkehrsmeldungslage, also häufigen Änderungen der Verkehrslage, die häufigen Anfragen über die Wahl der entsprechenden Route oft störend. Diese Anfragen sind aber dann von großem Interesse, wenn sich die alternative Route gegenüber der originalen in großem Maße verschlechtert, die Routenänderungsdifferenz also über einem ersten Schwellwert 31 (Figuren 4 und 6) liegt. Bei Routenverbesserungen, beispielsweise aufgrund von Löschmeldungen oder dem Wegfall von Verkehrsmeldungen, also einer Routenänderungsdifferenz kleiner Null oder alternativ kleiner einem dritten Schwellwert 33, der kleiner Null ist, soll keine Anfrage bezüglich der Dynamisierung durchgeführt werden.

In einigen Fällen stellt die berechnete Alternativroute nur einen sehr geringen und kaum nennenswerten Vorteil gegenüber der alten Route dar, der Routenvorteil ist sehr klein, also kleiner einem zweiten Schwellwert 32 (Figuren 5 und 6). Der Fahrer muss beispielsweise die Autobahn oder Bundesstraße verlassen und wird über Land- und Kreisstraßen um die Störung herumgeführt. Diese Form der Alternative für einen sehr kleinen Fahrzeitvorteil TTA wird meist nicht verstanden und akzeptiert. In diesem Fall soll daher vorzugsweise keine Dynamisierung erfolgen, auch ist keine Benutzeranfrage erwünscht.

Die beiden zuvor benannten Aspekte sind von einander unabhängig und können, wie in Figur 6 dargestellt, in Bezug gebracht werden. Routenverbesserungen, also TDV kleiner Null, können nur bei gelöschten Verkehrsmeldungen auftreten. Je nach betrachtetem Kriterium, beispielsweise "optimale Route", welche eine Kombination aus kürzester und schnellster Route darstellt, kann sich dabei die Besonderheit ergeben, dass der Fahrzeitvorteil und der Fahrzeitanteil am Widerstand der Routenänderungsdifferenz vom Betrag her gleich groß sind. Deshalb soll in diesem Fall auch bei einer kleinen Routenänderungsdifferenz TDV kleiner erstem Schwellwert 31 und größer drittem Schwellwert 33 im Fall von Löschmeldungen keine Dynamisierung erfolgen.

Erfindungsgemäß erfolgt eine Benutzeranfrage nur noch dann, wenn die Auswahl der zweiten Route R2 gegenüber der ersten Route R1 eine erhebliche Routenverschlechterung, also TDV größer erstem Schwellwert 31, bedeuten würde (Bereich 41 in Figur 6). Bei dem hier beschriebenen vorteilhaften Ausführungsbeispiel der Erfindung wird weiterhin automatisch eine der beiden Routen R1 oder R2 gewählt, wenn die Routenänderungsdifferenz den ersten Schwellwert 31 nicht überschreitet. Da nicht mehr bei jeder Kleinigkeit der Nutzer gefragt wird, wird dieser somit weniger vom Verkehrsgeschehen abgelenkt, behält aber die Einflussnahmemöglichkeit für den Fall gravierender Änderungen grundsätzlich bei.

Zusammenfassend sollen also dem Benutzer die erste Route R1 und die zweite Route R2 nur dann zur Auswahl angeboten werden, wenn die Routenänderungsdifferenz TDV den ersten Schwellwert 31 überschreitet (manuelle Dynamisierung, also nur nach Benutzerinteraktion), andernfalls automatisch eine der beiden Routen ausgewählt werden, wenn die Routenänderungsdifferenz TDV den ersten Schwellwert 31 nicht überschreitet.

Weiterhin ist vorzugsweise vorgesehen, dass auch der Routenvorteil, hier insbesondere in Gestalt des ein Fahrzeitvorteils TTA, berücksichtigt wird. Der zweite Schwellwert 32 definiert einen minimalen Fahrzeitvorteil, ab welchem eine automatische Dynamisierung erfolgen soll. In den Fällen, in denen die Routenänderungsdifferenz TDV den ersten Schwellwert 31 nicht überschreitet, soll daher dann, wenn
a) der Fahrzeitvorteil TTA den zweiten Schwellwert 32 überschreitet, automatisch die zweite Route R2 gewählt werden (automatische Dynamisierung, also ohne Benutzerinteraktion)
b) der Fahrzeitvorteil TTA den zweiten Schwellwert 32 nicht überschreitet, jedoch die Routenänderungsdifferenz TDV den Schwellwert 33 nicht unterschreitet, gemäß der hier beschriebenen vorteilhaften Ausführungsform automatisch die erste Route R1 gewählt werden (keine Dynamisierung) und
c) der Fahrzeitvorteil TTA den zweiten Schwellwert 32 nicht überschreitet, jedoch die Routenänderungsdifferenz TDV kleiner Null ist oder alternativ den dritten Schwellwert 33 unterschreitet, gemäß der hier beschriebenen vorteilhaften Ausführungsform automatisch die zweite Route R2 gewählt werden (automatische Dynamisierung).

Auch bei kleinem Routenvorteil TTA, jedoch großer Routenänderung TDV wird hier die manuelle Dynamisierung der vollständigen Unterdrückung der Dynamisierung vorgezogen aus der Überlegung heraus, dass Verkehrsmeldungen möglicherweise nicht hundertprozentig zuverlässig sind oder deren Auswirkungen auf den Verkehrsfluss und damit die Fahrzeit möglicherweise nicht genau vorhersehbar sind. In diesem Fall wird dem Benutzer die Möglichkeit gegeben, aus seinem möglicherweise zu den betroffenen Strecken vorhandenen Erfahrungsschatz oder sonstigen Präferenzen, beispielsweise Umgehung ihm bekannter Autobahn-Großbaustellen auf einer der Routen oder dergleichen, eine Entscheidung für die eine oder die andere Route zu treffen.

Basierend auf der in Figur 2 dargestellten Routensituation lässt sich folgendes Beispiel abbilden, wobei die Routenänderungsdifferenz auf Basis der Fahrstrecke und der Routenvorteil auf Basis der Fahrzeit betrachtet wird.

| | Alte Route (R1) | | Neue Route (R2) | TTA | TDV |
|---|---|---|---|---|---|
| | Alte Verkehrslage | Neue Verkehrslage | Neue Verkehrslage | | |
| Fahrzeit [h] | 01:00 | 01:15 | 01:10 | 00:05 | |
| Fahrstrecke [km] | 60 | 60 | 70 | | +10 |

Je nach eingestellten Schwellwerten kann es zu unterschiedlichem Verhalten kommen. Solange der Verlust in Form der Routenänderungsdifferenz unterhalb der Schwelle 31 (TDV_{Threshold}) liegt, erfolgt keine Anfrage hinsichtlich der Dynamisierung, was bei folgender Schwelle der Fall ist: TDV_{Threshold} = +20. Ist der Schwellwert jedoch so klein, dass die Routenänderungsdifferenz darüber liegt, z.B. TDV_{Threshold} = +5, so erfolgt eine Anfrage beim Anwender hinsichtlich der Verwendung der alten Route R1 oder neuen Route R2.

Für den Fall, dass der Verlust in Form der Routenänderungsdifferenz TDV den Schwellwert 31 nicht übersteigt, erfolgt eine direkte Dynamisierung nur, wenn der Fahrzeitvorteil TTA über dem eingestellten minimalen Fahrzeitvorteil TTA_{Threshold} liegt. Im aufgezeigten Beispiel erfolgt eine direkte Dynamisierung nur, falls als Schwellwert TTA_{Threshold} ein Wert kleiner oder gleich 0:05 eingetragen wurde.

Für die Löschung der Verkehrsstörung ergibt sich das folgende Bild.

| | Alte Route (R2) | | Neue Route (R3) | TTA | TDV |
|---|---|---|---|---|---|
| | Alte Verkehrslage | Neue Verkehrslage | Neue Verkehrslage | | |
| Fahrzeit [h] | 01:10 | 01:10 | 01:00 | 00:10 | |
| Fahrstrecke [km] | 70 | 70 | 60 | | -10 |

Aufgrund der Verbesserung der Route erfolgt in jedem Fall keine Anfrage beim Nutzer über die Dynamisierung, sondern die Entscheidung erfolgt anhand des Fahrzeitvorteils. Je nach Anteil der Fahrzeit und der Fahrzeitvorteilsschwelle wird die Dynamisierung durchgeführt oder nicht.

Gemäß einer vorteilhaften Weiterbildung der Erfindung werden die Schwellwerte, die zu einer Nutzerinteraktion führen, automatisch an das Nutzerverhalten angepasst. In diesem Fall "lernt" das Navigationssystem die neuen Schwellwerte automatisch. Hierzu wird die Tendenz zur Ablehnung oder Bestätigung bei der nutzerbestätigten Dynamisierung hinsichtlich des Schwellwertes in Beziehung gebracht.

Zur Auswahl durch den Benutzer können vorteilhaft die beiden zur Wahl stehenden Routen R1 und R2 oder R2 und R3 auf der Anzeige 19 des Navigationsgeräts 1, vorzugsweise in einer Kartendarstellung eingezeichnet, dargestellt werden. Insbesondere können dabei zusätzlich die die beiden Routen R1 und R2 betreffenden, vorliegenden Verkehrsstörungsmeldungen, Im Fall der Figur 2, die Meldung betreffend die Störung 27, in der Kartendarstellung eingezeichnet werden. Die Routenauswahl kann dann durch Betätigung eines Bedienelements der Bedieneinrichtung 12 erfolgen.

Alternativ kann auch vorgesehen sein, dass wie aus der EP 0 838 797 B1 bekannt, alternative Zielführungshinweise für beide Routen R1 und R2 mit dem Hinweis ausgegeben werden, welche der Routen durch Befolgen welches Hinweises weiter befahren wird, also etwa in der Form

"Zur Auswahl der bisherigen Route geradeaus weiterfahren und der A6 weiter folgen. Zur Auswahl einer alternativen, auf Grundlage neuer Verkehrsmeldungen neu berechneten Route, an der nächsten Anschlussstelle auf die A5 in Richtung Karlsruhe abbiegen und der A5 folgen",
wobei eine der Routen dann durch Weiterfahrt entsprechend einem der Hinweise zu einer der Routen ausgewählt wird.

## Patentansprüche

1. Verfahren zum Bestimmen einer Route für eine Zielführung, folgende Schritte umfassend:
- Bestimmen einer ersten Route (R1) auf der Grundlage einer Verkehrslage;
- Bestimmen einer zweiten Route (R2) unter Berücksichtigung einer Änderung der Verkehrslage;
- Bestimmen eines Maßes, in dem die Änderung der Verkehrslage die Route beeinflusst;
- Anbieten der beiden Routen (R1, R2) einem Benutzer zur Auswahl für eine weitere Zielführung nur dann, wenn das Maß (TDV) einen ersten Schwellwert (31) überschreitet, der durch den Benutzer vorgebbar ist.

2. Verfahren nach Anspruch 1, **dadurch gekennzeichnet, dass** automatisch eine der beiden Routen (R1, R2) für die folgende Zielführung bestimmt wird, wenn das Maß (TDV) den ersten Schwellwert (31) nicht überschreitet.

3. Verfahren nach einem der vorhergehenden Ansprüche, **dadurch gekennzeichnet, dass** automatisch die zweite Route (R2) bestimmt wird, wenn das Maß (TDV) kleiner Null ist.

4. Verfahren nach einem der vorhergehenden Ansprüche, **dadurch gekennzeichnet, dass** ein Routenvorteil, insbesondere Fahrzeitvorteil, (TTA) aus einem Vergleich der Auswirkungen des Befolgens der zweiten Route R2) mit denen des Befolgens der ersten Route (R1) jeweils unter Berüchsichtigung der Andenung der Verkehrslage bestimmt wird und dass automatisch die zweite Route (R2) bestimmt wird, wenn der Routenvorteil (TTA) einen zweiten Schwellwert (32) überschreitet und das Maß (TDV) den ersten Schwellwert (31) nicht überschreitet.

5. Verfahren nach einem der vorhergehenden Ansprüche, **dadurch gekennzeichnet, dass** ein Routenvorteil (TTA) aus einem Vergleich der Auswirkungen des Befolgens der zweiten Route (R2) mit denen des Befolgens der ersten Route (R1) jeweils unter Beruchsichtigung der Änderung der Verkehrslage bestimmt wird und dass automatisch die erste Route (R1) ausgewählt wird, wenn das Maß (TDV) den ersten Schwellwert (31) nicht überschreitet und einen dritten Schwellwert (33) nicht unterschreitet sowie der Routenvorteil (TTA) den zweiten Schwellwert (32) nicht überschreitet.

6. Verfahren nach Anspruch 5, **dadurch gekennzeichnet, dass** der dritte Schwellwert (33) gleich Null ist.

7. Verfahren nach einem der vorhergehenden Ansprüche, **dadurch gekennzeichnet, dass** zur Unterstützung des Benutzers bei der Auswahl einer der angebotenen Routen (R1, R2) das Maß (TDV) und vorzugsweise auch der Routenvorteil (TTA) ausgegeben werden.

8. Verfahren nach einem der vorhergehenden Ansprüche, **dadurch gekennzeichnet, dass** der erste und die gegebenenfalls weiteren Schwellwerte automatisch an ein Benutzerverhalten angepasst werden.

9. Anordnung (1) zur Durchführung eines Verfahrens zum Bestimmen einer Route für eine Zielführung, wobei die Anordnung folgende Elemente umfasst:
- Mittel (13) zur Bestimmung einer ersten Route (R1) auf der Grundlage einer Verkehrslage und zum Bestimmen einer zweiten Route (R2) unter Berücksichtigung einer Änderung der Verkehrslage;
- Mittel (101) zur Bestimmung eines Maßes, in dem die Änderung der Verkehrslage die Route beeinflusst;
- Entscheidungsmittel (101) zur Entscheidung, ob das Maß (TDV) einen durch einen Benutzer vorgebbaren ersten Schwellwert (31) überschreitet; und
- Ausgabemittel (16, 19) zum Anbieten der beiden Routen (R1, R2) dem Benutzer zur Auswahl für eine weitere Zielführung, falls das Maß den ersten Schwellwert (31) überschreitet.

## Claims

1. Method for determining a route for routing, comprising the following steps:
- a first route (R1) is determined on the basis of a traffic situation;
- a second route (R2) is determined taking account of a change in the traffic situation;
- an extent to which the change in the traffic situation influences the route is determined;
- the two routes (R1, R2) are offered to a user for selection for further routing only if the extent (TDV) exceeds a first threshold value (31), which can be prescribed by the user.

2. Method according to Claim 1, **characterized in that** one of the two routes (R1, R2) is automatically determined for the subsequent routing if the extent (TDV) does not exceed the first threshold value (31).

3. Method according to one of the preceding claims, **characterized in that** the second route (R2) is automatically determined if the extent (TDV) is less than zero.

4. Method according to one of the preceding claims, **characterized in that** a route advantage, particularly a travelling time advantage (TTA), is determined from a comparison of the effects of following the second route (R2) with those of following the first route (R1), in each case taking account of the change in the traffic situation, and **in that** the second route (R2) is automatically determined if the route advantage (TTA) exceeds a second threshold value (32) and the extent (TDV) does not exceed the first threshold value (31).

5. Method according to one of the preceding claims, **characterized in that** a route advantage (TTA) is determined from a comparison of the effects of following the second route (R2) with those of following the first route (R1), in each case taking account of the change in the traffic situation, and **in that** the first route (R1) is automatically selected if the extent (TDV) does not exceed the first threshold value (31) and does not exceed a third threshold value (33) and also the route advantage (TTA) does not exceed the second threshold value (32).

6. Method according to Claim 5, **characterized in that** the third threshold value (33) is equal to zero.

7. Method according to one of the preceding claims, **characterized in that** the user is assisted in the selection of one of the offered routes (R1, R2) by virtue of the extent (TDV) and preferably also the route advantage (TTA) being output.

8. Method according to one of the preceding claims, **characterized in that** the first threshold value and the possible further threshold values are automatically matched to a user behaviour.

9. Arrangement (1) for carrying out a method for determining a route for routing, wherein the arrangement comprises the following elements:
- means (13) for determining a first route (R1) on the basis of a traffic situation and for determining a second route (R2) taking account of a change in the traffic situation;
- means (101) for determining an extent to which the change in the traffic situation influences the route;
- decision means (101) for deciding whether the extent (TDV) exceeds a third threshold value (31), which can be prescribed by a user; and
- output means (16, 19) for offering the two routes (R1, R2) to the user for selection for further routing if the extent exceeds the first threshold value (31).

## Revendications

1. Procédé de détermination d'un itinéraire conduisant vers une destination, le procédé comportant les étapes suivantes :
- déterminer un premier itinéraire (R1) sur la base de l'état du trafic,
- déterminer un deuxième itinéraire (R2) qui tient compte d'une modification de l'état du trafic,
- déterminer la mesure dans laquelle la modification de l'état du trafic influence l'itinéraire,
- proposer les deux itinéraires (R1, R2) à un utilisateur pour qu'il sélectionne un autre trajet vers sa destination uniquement lorsque la mesure (TDV) dépasse une première valeur de seuil (31) qui peut être prédéterminée par l'utilisateur.

2. Procédé selon la revendication 1, **caractérisé en ce que** l'un des deux itinéraires (R1, R2) est déterminé automatiquement pour la suite du trajet vers la destination lorsque la mesure (TDV) ne dépasse pas la première valeur de seuil (31).

3. Procédé selon l'une des revendications précédentes, **caractérisé en ce que** le deuxième itinéraire (R2) est déterminé automatiquement lorsque la mesure (TDV) est inférieure à zéro.

4. Procédé selon l'une des revendications précédentes, **caractérisé en ce qu'**un avantage d'itinéraire, en particulier un avantage (TTA) en termes de durée de conduite, est déterminé en comparant les effets de l'adoption du deuxième itinéraire (R2) à ceux de l'adoption du premier itinéraire (R1), chaque fois en tenant compte de la modification de l'état du trafic, et **en ce que** le deuxième itinéraire (R2) est déterminé automatiquement lorsque l'avantage d'itinéraire (TTA) dépasse une deuxième valeur de seuil (32) et lorsque la mesure (TDV) ne dépasse pas la première valeur de seuil (31).

5. Procédé selon l'une des revendications précédentes, **caractérisé en ce qu'**un avantage d'itinéraire, en particulier un avantage (TTA) en termes de durée de conduite, est déterminé en comparant les effets de l'adoption du deuxième itinéraire (R2) à ceux de l'adoption du premier itinéraire (R1), chaque fois en tenant compte de la modification de l'état du trafic, et **en ce que** le premier itinéraire (R1) est sélectionné automatiquement lorsque la mesure (TDV) ne dépasse pas la première valeur de seuil (31) et ne dépasse pas une troisième valeur de seuil (33) et lorsque l'avantage d'itinéraire (TTA) ne dépasse pas la deuxième valeur de seuil (32).

6. Procédé selon la revendication 5, **caractérisé en ce que** la troisième valeur de seuil (33) est égale à zéro.

7. Procédé selon l'une des revendications précédentes, **caractérisé en ce que** pour assister l'utilisateur dans la sélection d'un des itinéraires (R1, R2) proposés, la mesure (TDV) et de préférence également l'avantage d'itinéraire (TTA) sont présentés.

8. Procédé selon l'une des revendications précédentes, **caractérisé en ce que** la première et éventuellement les autres valeurs de seuil sont adaptées automatiquement au comportement de l'utilisateur.

9. Système (1) en vue de l'exécution d'un procédé de détermination d'un itinéraire conduisant vers une destination, le système présentant les éléments suivantes :
- des moyens (13) qui déterminent un premier itinéraire (R1) sur la base de l'état du trafic et qui déterminent un deuxième itinéraire (R2) qui tient compte d'une modification de l'état du trafic,
- des moyens (101) qui déterminent une mesure selon laquelle une modification de l'état du trafic influence l'itinéraire,
- des moyens de décision (101) qui décident si la mesure (TDV) dépasse une première valeur de seuil (31) prédéterminée par l'utilisateur et
- des moyens de sortie (16, 19) qui présentent les deux itinéraires (R1, R2) à l'utilisateur pour qu'il sélectionne un autre trajet vers sa destination au cas où la mesure dépasse la première valeur de seuil (31).
